# EUROPEAN PATENT APPLICATION

(11) **EP 1 681 653 A1**
(43) Date of publication of application: **19.07.2006**
(21) Application number: 06100299.4
(22) Date of filing: 12.01.2006
(51) Int. Cl.: G06Q 30/00, H04L 29/00

(54) **Platform for managing the targeted display of advertisements in a computer network**

(30) Priority: 14.01.2005 US 36849
(71) Applicant: Adsclick S.A., 1007 Lausanne (CH)
(72) Inventor: Rossini, Pascal, 1162 Saint-Prex (CH)
(74) Representative: Cronin, Brian Harold John

(57) **Abstract**

A system for the targeted contextual display of advertisements in a distributed computer network such as the Internet comprises management platforms (30,PP1,PP2) each having a sponsor site management unit (11) accessible to sponsors, a host site management unit (21) accessible to hosts and means for matching keywords, categories and/or parameters of the sponsor sites with those of the host sites for the targeted contextual display of advertising links from sponsor sites (10) on host sites (20). A shared server platform (40) is common to and interconnects the management platforms (30,PP1,PP2). Each management platform (30,PP1,PP2) is associated with its own sponsor sites (10) and its own host sites (20) and constitutes an autonomous system for management of the targeted contextual display of advertising links, that can be operated under the operator's own brand. The shared server platform (40) is arranged to enable the targeted contextual display of advertising links (Ad A, Ad B) from sponsor sites (10) on host sites (20) associated with different management platforms (30,PP1,PP2), optionally with capacity for the user to call a sponsor via a VOIP application.

## Description

### FIELD OF THE INVENTION

The invention relates to a management platform for managing the diffusion in particular of sponsored advertisement links via the Internet and other networks.

### BACKGROUND OF THE INVENTION

At present there are numerous Internet sites proposing to site owners the addition of sponsored links. These links are placed on a host site and allow access to the site of an advertiser or sponsor for advertising purposes. For each netsurfer who accesses the sponsor's site through a host site, the sponsor pays a financial retribution which is to be distributed between the supplier of promotional services and the site owner who has agreed to integrate this type of link on his site. These services are well known and in particular are proposed by the companies Google and Ouverture. As a payment is generated each time a site is accessed by a computer mouse click, these services are known under the name "pay-per-click".

The presently available systems are all closed systems in the sense that it is impossible for companies or individuals to be able to manage, for their own account, advertising on supports such as Internet, Extranet or Intranet sites, television networks or telephone networks, or to manage accounts for advertisers wishing to diffuse advertisements of all types and in any formats. To the contrary, in the known systems for publishing sponsored links, each system is managed by a central organization, which implies limitations in the management of advertising accounts. On the one hand the gathering of advertisements is managed by the central organization, and on the other hand the same or a different organization centralizes recruitment of host sites to publish the advertisements. Typically the central organization will link the publication of advertisements with a "free" service, such as the use of its search engine.

With the known systems for displaying sponsored links when the parameters, and in particular those setting the location and color, have been defined, the advertising links displayed on a determined host site are proposed automatically. These links are determined according to an analysis of the contents of the host site, of its language and possibly other predefined parameters. A search is then carried out by means of a search engine among the sites of potential sponsors, that is to say the sites of owners having announced that they are prepared to pay a certain amount for each visit to their site originating from a host site. The aim of this search is to find one or more sites similar to a host site. This analogy is carried out in particular regarding the content and language of the sites. The links towards the sponsor sites are then integrated into the host site.

With known systems, the host site inevitably integrates links towards the sites of its own competitors, since the subjects processed are analogous. To avoid this, the suppliers of these services propose means to make it possible to exclude specific competitor's sites by indicating their URL address. These means do not allow the personalized management of the links, that is to say a management of the links that responds to criteria specific to each owner of a host site.

WO 2004/06156 has proposed a browsing device and associated management platform that is more open for the hosts. In this browsing-device and management platform, each browsing device is connected to a host site made up of at least one page defined by a computer code accessible by the computer network, the management site including a management file associated to each browsing device. This file in the management site contains data defining the appearance of the display panel on the host site, the management file being accessible from the host site in a manner to permit the installation, configuration and/or modification of the data defining the appearance of the display panel from the host site.

This invention of WO 2004/06156 mitigates the drawbacks of the browsing devices of the prior art by offering a flexible device that is simple to use and configure and that is applicable in particular to the display of advertising links or sponsored links. This device does not require the introduction of configuration parameters in the computer code of the host site, thus allowing easier installation and greater flexibility in its configuration and its method of use. As an auxiliary browsing element, it can remain at the disposition of the user continuously or on request. Furthermore, the device can be activated on-line immediately after registration.

For the display of sponsored links, it is possible to modify the display parameters in a simple and flexible way without modifying the computer code of the host site. It is also possible to install this device without having to modify the aesthetics of an existing site.

Furthermore, the links appearing on the host site can be managed in an optimal way. For this, it is possible to define the links in such a way that they actually correspond to sites presenting an interest for the visitor of a host site, without creating a risk detrimental to the owner of the host site. This device allows so-called "pay-per-click" pay-access advertising services to be offered from more numerous host sites than previously, due to the ease of its installation and due to the fact that it does not require a change of site or changes regarding the code or its aesthetics. Due to the complexity of setting up prior art systems, it is not worthwhile for a host site owner receiving a limited number of visits to integrate these types of links on his site. In view of the fact that that this complex setting up has been eliminated, the integration of this service proves interesting even for host sites receiving few visits. As regards the advertisers or sponsors, the fact that a targeted public can access their site from a larger number of points makes the service particularly interesting.

This invention of W02004/06156 thus offers an application accessible to any individual or company desiring to use it in order to display and diffuse advertising on a host site. Unlike the system of WO 2004/06156, other prior art systems are closed, that is to say usable only by their owner or person responsible for their use.

This invention of WO 2004/06156 is particularly advantageous over prior devices, since it combines the advantages of different existing browsing systems, without presenting the drawbacks. In particular, the device does not require the introduction of the configuration parameters into the computer code of the host site, which allows simpler installation and greater flexibility in its configuration and method for use. As an auxiliary aid element to browsing it can remain available to the user either continuously or on request. The display panel allows browsing between sites or within one site. It is very user-friendly and effective, without implying an important and irreversible loss of the space available to display useful data. Furthermore, it allows the management of sponsored links in a simple, flexible and targeted way both for the owner of a host site as well as for the owner of a sponsor site.

WO 2004/06156 thus provides a system that is more open in particular to host sites and is more attractive to sponsor sites because it opens the possibilities for advertising on sites which, though they may not receive many visits, are relevant targets. Nevertheless, there is still a need to make the management of targeted advertising less dependent on a central closed configuration so as to offer the possibility for independent agencies to manage their own advertisement distribution while making many sources of advertisements available for display on many host sites, in a coordinated way.

### SUMMARY OF THE INVENTION

An object of the invention is to make available for businesses that would like to provide their own sponsored link advertising services a management platform that enables them to manage all activities relating to sponsor sites and host sites and with which many sources of advertisements can be made available for display on many host sites.

The invention pertains to a system for the targeted contextual display of subjects, in particular advertisements, in a distributed computer network such as the Internet which comprises sponsor sites each containing subjects to be displayed on host sites and host sites each having at least one page with a display panel for displaying subjects from sponsor sites. The system comprises a plurality of management platforms each having operating means that include:
- a sponsor site management unit that is accessible to sponsors, that includes means for sponsors to administer the targeted display of subjects from sponsor sites, and means for storing keywords, categories and/or parameters that are derived from sponsor sites and that identify contexts for the targeted display of subjects in the host sites;
- a host site management unit accessible to hosts, that includes means for hosts to administer the targeted display of subjects from sponsor sites on pages of their host sites, and means for storing keywords, categories and/or parameters that are derived from host sites and that identify contexts by which the host sites are targeted; and
- means for matching the keywords, categories and/or parameters of the sponsor sites with those of the host sites for the targeted contextual display of subjects from sponsor sites on host sites.

To achieve the aim of the invention, the system comprises a shared server platform common to the different management platforms. The operating means of all of the management platforms are compatible. The means for matching of the management platforms are interconnected via the shared server platform, so it will be possible for the management platforms to operate independently, but in cooperation with one another via the shared server platform.

Each management platform is associated with its own sponsor sites and its own host sites, which can access only their own management platform. Each management platform constitutes an autonomous platform for the targeted contextual display of subjects in the distributed computer network. Moreover, the shared server platform is arranged to enable the targeted contextual display of subjects from sponsor sites on host sites that are associated with different management platforms.

With this invention, each management server platform enables the independent and autonomous operation of targeted advertising links between the sponsors and hosts of the management platform, and the shared server platform allows sharing between the sponsors and hosts of different management platforms, as set out in detail below. In this way, the invention allows the operator of each management platform to independently manage its own network of sponsor sites and host sites using its own brand or trade designation. This is not possible with existing sponsored link systems that have a purely central and closed management, or with existing arrangements for local advertising.

To enable such sharing, each management platform can be identified by its own management site code, and this unique code of each management platform is associated with all its activities as follows.

This code associates the keywords, categories and/or parameters of each management platform's sponsor sites and of each management platform's host sites with the management platform code of the management platform with which they are associated. In this way all sponsor sites and host sites are linked by this code to the management platform so that all operations pertaining to a sponsor site or a host site can be identified by the code of their management platform.

Following this scheme, the keywords, categories and/or parameters of sponsor sites, which are associated with the management platform code of one management platform, are available for matching with the keywords, categories and/or parameters of the host sites. This matching is via the management platform itself for matching sponsor and host sites of the same management platform, or via the shared server platform for matching with those of other management platforms, this availability for matching being subject to possible exceptions. In other words, all sponsor sites of one management platform can be published on matching host sites of the same management platform, or via the shared server platform with those of different management platforms. The possible exceptions can be defined by the sponsors (for instance a sponsor who does not want his advertisements placed on the pages of indicated competitors) or by the proprietor of the management platform.

Likewise, the keywords, categories and/or parameters of host sites, which are associated with the management platform code of one management platform, are available for matching with the keywords, categories and/or parameters of the sponsor sites of the same management platform or via the shared server platform with those of other management platforms, this availability for matching also being subject to possible exceptions. This means that all host sites of one management platform can receive matching advertisements from the sponsor sites of the same management platform, or via the shared server platform with those of different management platforms, with possible exceptions defined by the hosts (for instance a host who does not want advertisements of its indicated competitors to be published on his own site) or exceptions defined by the operator of the management platform.

This represents one way by which the system of the invention enables the targeted contextual display of subjects from sponsor sites on host sites that are associated with the same management platform or that are associated with different management platforms, while the management of the individual management platforms remains autonomous. This allows the management platform's operator to independently manage the business aspects of targeted advertising links in a coordinated fashion where their hosts have access to a wide range of advertisers and where their advertisers can target a wide range of hosts.

The system preferably comprises means for compiling statistics relating to the operations performed relating to given sponsor sites and to given host sites, these statistics preferably being associated with the management platform codes of the sponsor sites and host sites. In one embodiment, each management platform comprises means for compiling such statistics.

The shared server platform of the system can comprise a central statistical unit that is common to the management platforms, the central statistical unit having means for compiling statistics relating to operations performed by the different management platforms relating to given sponsor sites and operations performed by the different management platforms relating to given host sites. The shared server platform may also make use of statistics generated in the different management platform.

These compiling means in the management platforms and/or in the shared server platform for instance compile statistics that relate to the number of times that given sponsor sites communicate with or are displayed or accessed by host sites, the duration of such communication, display or access and/or the number of times that an action is performed in relation thereto, and to the number of times that given host sites communicate with or display or access sponsor sites, the duration of such communication, display or access and/or the number of times that an action is performed in relation thereto.

When the shared server platform performs statistical operations, corresponding results will be made available to the management platforms so their operators can access relevant statistics, and so that the sponsors and hosts concerned by particular statistics can access them.

Preferably, each management platform comprises means for deriving the keywords, categories and/or parameters from sponsor sites and host sites. The keyword/category/parameter deriving means can include at least one of the following, and preferably offers a large choice from the various possibilities:
a) means for assisting the input of keywords by the user of a sponsor site or a host site, for instance in the form of an assistance menu with prompts for the sponsor or host to input keywords;
b) means for automatically generating keywords, categories and/or parameters by analysis of text in a site, in particular allowing contextual analysis in real time;
c) means for generating keywords, categories and/or parameters from metatags in the header/title of a site.
d) means for processing audio content of a site and for generating keywords, categories and/or parameters from the processed audio content, which can include voice recognition programs that produce text from the audio content, this text then being analyzed for instance by the above-indicated means b).

A combination of the above means enables in particular real time matching of sponsor sites and host sites, by providing dynamic contextual matching of hosts and sponsors.

The system can operate with host sites whose display panel is one or more of the following:
i) a horizontal or vertical banner or other fixed space;
ii) a sidebar;
iii) linked text that activates a display in response to a user actuation;
iv) a superimposed movable element that can be displaced on a page of the host site and that contains links that activate a display in response to a user actuation (as in WO 2004/06156);
v) a zone linked by VOIP enabling the user to initiate a telephone communication with a sponsor;
vi) a panel common to several pages of a host site;
vii) display area(s) structured to display at least one of the following types of links: sponsored link; link towards a page on another site; link towards another page on the host site;
viii) a display panel made up of a function control area having a rectangular form, and rectangular display areas that can be opened in the corners and/or along edges of the control area; and
ix) display area(s) including images and/or text associated with sponsored links.

In an advantageous embodiment, the management platforms comprise means for storing, in the management platforms, the codes that define the attributes of the display panel of the host sites, these storing means in the management platform being accessible from the respective host sites, as described and claimed in WO 2004/061546. This combines the flexibility for user site integration according to WO 2004/061546 with the overall management flexibility of the present invention, making available to advertising agencies or other companies or individuals the possibility to operate an autonomous management platform having a local or field-restricted activity in the recruitment of advertisers and/or host sites. This possibility for increased flexibility in management of the host sites will usually be offered in conjunction with the other ways of managing host site pages, so that hosts have a wide choice of the ways displays can be made on their sites, using banners etc. whose parameters can also be defined in the code of the host site.

Additionally, at least one management platform of the system can maintain a site containing pages that are available as sponsor site/pages for use by advertisers who don't have their own site or who don't wish to use their own site for this purpose.

The invention also allows advertisers to make a bid, that is to say "to buy" by auction bids, the right to appear in a predominant position on a site or on a site that is visited very frequently. Furthermore, it allows the administration of accounts associated with the users of this invention.

### BRIEF DESCRIPTION OF THE DRAWINGS

The invention will be further described with reference to the accompanying schematic drawings given by way of example, in which:
- Fig. 1 is a diagram of a system according to the invention illustrating how two management platforms interconnected via a shared server platform place advertisements on each others host sites;
- Fig. 2 is a diagram of the organization of one management platform;
- Figs. 3, 4 and 5 are diagrams of steps in processing targeted advertising links;
- Fig. 6 illustrates the principle of matching and scoring;
- Fig. 7 is a diagram of another management platform and its interaction with a computer network;
- Fig. 8a shows a browsing device of a preferred embodiment of the invention, as it would appear on the computer display of a host site;
- Fig. 8b shows the browsing device of Fig. 8a when it is partially closed; and
- Fig. 9 is a diagram of a VOIP application.

### DETAILED DESCRIPTION

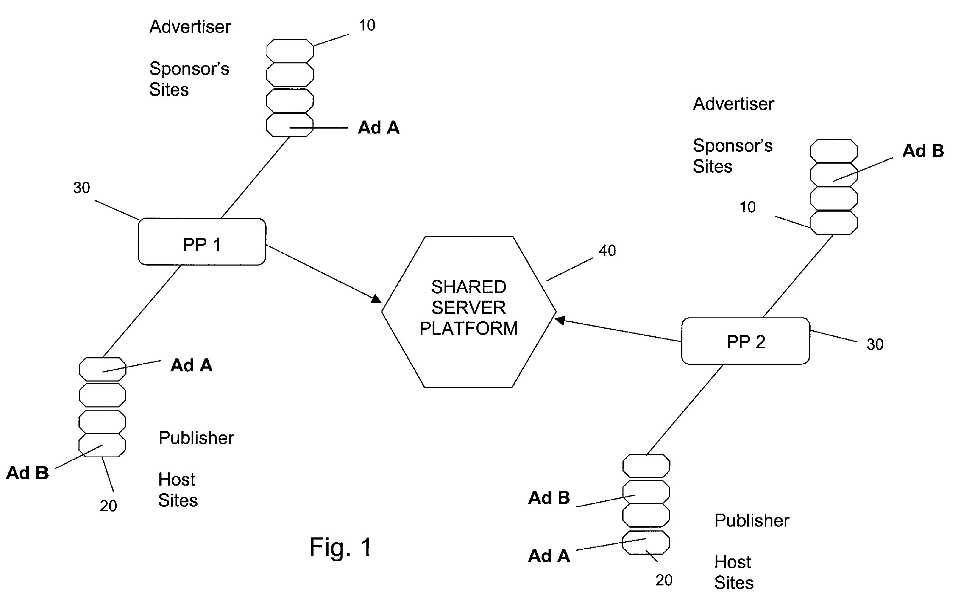

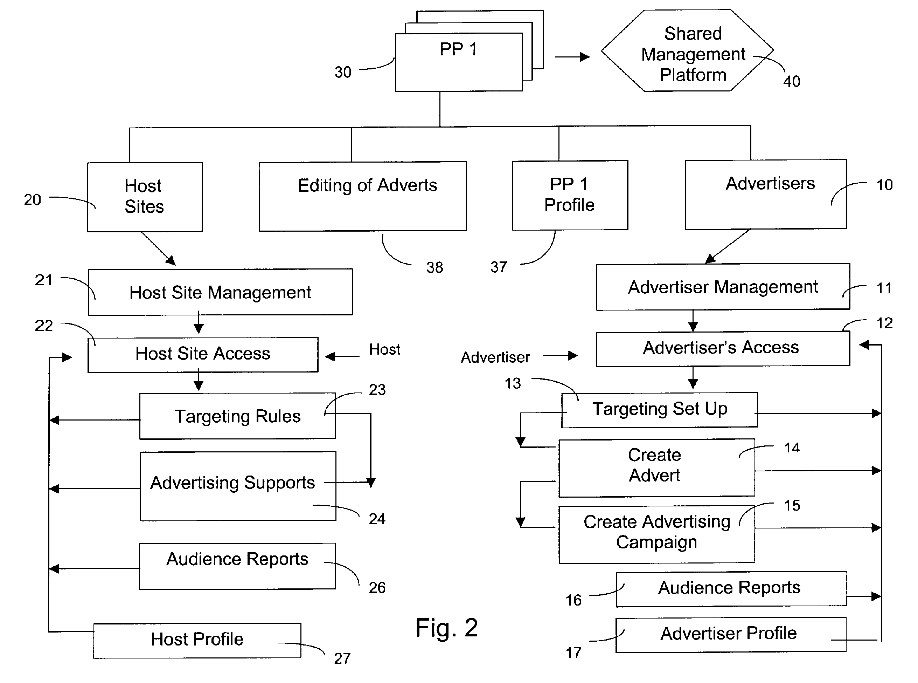

Fig. 1 schematically shows a system according to the invention for the targeted contextual display of advertisements in a distributed computer network such as the Internet. The network comprises sponsor sites 10 each containing subjects to be displayed on host sites, and host sites 20 each having at least one page arranged to display advertisements or other subjects from sponsor sites 10. The system comprises several management platforms 30 each having operating means that will be described later in connection with Figures 2-6. The management platforms operate autonomously and are referred to as "Preferred Partners" or "PP" because their operators can each independently and autonomously manage all matters relating to the targeted display of advertisements from their sponsor's sites 10 and all matters relating to their associated host sites 20.

The system operates by comparing keywords, categories and/or parameters that are derived from sponsor sites 10 and that identify contexts for the targeted display of subjects in the host sites 20 with keywords, categories and/or parameters that are derived from host sites 20 and that identify contexts by which the host sites 20 are targeted.

The system has a shared server platform 40 for the different management platforms 30. The operating means of all of the management platforms 30 are identical or compatible and are interconnected via the shared server platform 40, so it will be possible for them to operate independently, but in cooperation with one another via the shared server platform 40.

For simplicity, Fig. 1 shows two management platforms 30, designated PP1 and PP2, associated with the shared server platform 40. Of course, any number of management platforms 30 can be operated from one shared server platform 40.

Each management platform 30 (PP1 and PP2) is associated with its own sponsor sites 10 and its own host sites 20 and constitutes an autonomous system for the targeted contextual display of subjects in the distributed computer network. Moreover, the shared server platform 40 is arranged to enable the targeted contextual display of advertisements or other subjects from sponsor sites 10 on host sites 20 that are associated with different management sites (PP1 or PP2). This allows the operator of each management site PP1 or PP2 to independently manage its own network of sponsor sites 10 and host sites 20. With this invention the shared server platform 40 enables the independent and autonomous operation of targeted advertising links between the sponsors 10 and hosts 20 of each management platform PP1, PP2, etc. yet allows sharing between the sponsors and hosts of different management sites, as set out in detail below.

To enable such sharing, each management platform 30 (PP1 or PP2) can be identified by its own management platform code that is different for the different management platforms, and this unique code of each management platform is associated with all its activities as follows.

The keywords, categories and/or parameters of each management platform's sponsor sites 10 and the keywords, categories and/or parameters of each management platform's host sites 20 are associated with the management platform code of the management platform 30 (PP1 or PP2, etc) to which they belong. In this way all sponsor sites 10 and host sites 20 are linked by the management platform code to the management platform PP1 or PP2 to which they belong.

The keywords, categories and/or parameters of sponsor sites 10, which are associated with the management platform code of one management platform, say PP1, are available for matching with the keywords, categories and/or parameters of the host sites 20, via the management platform PP1 with those of the same management platform, or via the shared server platform 40 with those of the other management platform PP2, this availability being subject to possible exceptions. This means that all sponsor sites 10 of one management platform, say PP1, can be published on the host sites 20 of the same management platform PP1, or via the shared server platform 40 with those of different management platforms PP2 etc, with possible exceptions that, as mentioned above, can be defined by the sponsors (for instance a sponsor who does not want his advertisements placed on the pages of indicated competitors) or by the management platform's operator.

Likewise, the keywords, categories and/or parameters of host sites 20, which are associated with the management platform code of one management platform, say PP1, are available for matching with the keywords, categories and/or parameters of the sponsor sites 10 of the same management platform PP1 or via the shared server platform 40 with those of other management platform PP2 etc, this availability also being subject to possible exceptions. This means that all host sites 20 of one management platform can receive advertisements from the sponsor sites 10 of the same management platform PP1, or via the shared server platform 40 with those of different management platforms PP2 etc., with possible exceptions. As previously mentioned the exceptions can be defined by the hosts (for instance a host who does not want advertisements of its indicated competitors to be published on his own site) or by the management platform's operator.

This is illustrated in Fig. 1 by a simple example of an Advertisement A (Ad A) offered by one sponsor site 10 of management platform PP 1, and an Advertisement B (Ad B) offered by one sponsor site 10 of management platform PP 2. The derived contextual keywords of these adverts are compared, as described later, with the contextual keywords associated with the various host sites 20, and the advert is displayed on host sites 20 that show a corresponding match of keywords. In this example, one of the host sites of management platform PP1 shows a match with Ad A and displays this Ad A. Likewise, one of the host sites of management platform PP2 shows a match with Ad A and displays this Ad A. Similarly, another of the host sites of management platform PP2 shows a match with Ad B and displays this Ad B, and another of the host sites of management platform PP1 shows a match with Ad B and displays this Ad B.

The described system thus enables the targeted contextual display of subjects from sponsor sites 10 on host sites 20 that are associated with the same management platform (PP1/PP1 or PP2/PP2) or that are associated with different management platforms (PP1/PP2 or PP2/PP1), while the management of the targeted advertising links by the individual management platforms 30 remains autonomous. This allows management platform operators to independently manage the business aspects of targeted advertising links in a coordinated fashion where their hosts 20 have access to a wide range of advertisers 10 and where their advertisers can target a wide range of hosts.

The basic overall layout of a management platform 30's control interface is shown in Figure 2. Each management platform 30 has software for managing, on one side advertisers 10 and on the other side host sites 20. Each management platform 30 also has its own profile unit 37 containing its coordinates, including a management platform code, and a module 38 for performing editing of adverts submitted by advertisers 10, and any other needed central functions. As indicated schematically, all management platforms 30 (PP1 etc) are coordinated via a central shared server platform 40.

In the inventive system, all of the means for displaying linked advertisements and for managing one set of advertisers 10 and one set of hosts 20 are bought together on a single management platform 30 under control of one operator. Several autonomous management platforms PP1, PP2 etc, each associated with different sets of advertisers 10 and hosts 20, are interconnected by a shared server platform 40.

As illustrated in Fig. 2, the management of advertisers 10 and hosts 20 on each management platform 30 is functionally separated into a separate advertiser management units 11 accessible to advertisers at 12 and a separate host site management unit 21 accessible to hosts at 22.

The advertiser management unit 11 is organized as follows. A secure access point for advertisers is provided at 12. This gives access to each advertiser for the necessary setting up, modification of and management of the advertiser's account. Thus the advertiser can participate in setting up the targeting of his adverts, at 13, creating (or inserting) an advert at 14 and creating an advertising campaign at 15. The advertiser management unit 11 also has a module 16 for audience reports, and a module 17 for the advertisers profile, containing his coordinates etc.

Targeting 13 of the adverts can for instance involve the steps of designating the name of the advert, selection of countries, selection of keywords and key phrases and selection of other criteria.

Creating an advert at 14 can for instance involve the steps of designating the name, editing the advert using usual resources, selection of the targeting rules, and limitation options.

Creating an advertising campaign at 15 can involve designating the name, setting the campaign attributes including duration and budget, various other advanced settings, selection of adverts, and budget per advert. This can be followed by an interface for publication of the campaign and a payment interface.

The audience reports 16 can be organized by advertising campaign, by advert and by other parameters such as territory.

On the host side, a secure access point for hosts is provided at 22. This gives access to each host for the necessary setting up, modification of and management of the host's account. Thus the host can participate in setting up the targeting rules pertaining to his site, at 23, and the setting up of advertising supports at 24. The latter involves introducing the necessary code to define zones on host pages to receive the targeted advertisements etc. The host management unit 11 also has a module 26 for audience reports, and a module 27 for the host's profile, containing his coordinates etc.

The targeting rules 23 can for instance involve the steps of designating the name of the host site, defining the formats for adverts for the search, defining the criteria, defining forbidden keywords, defining forbidden URLs, etc.

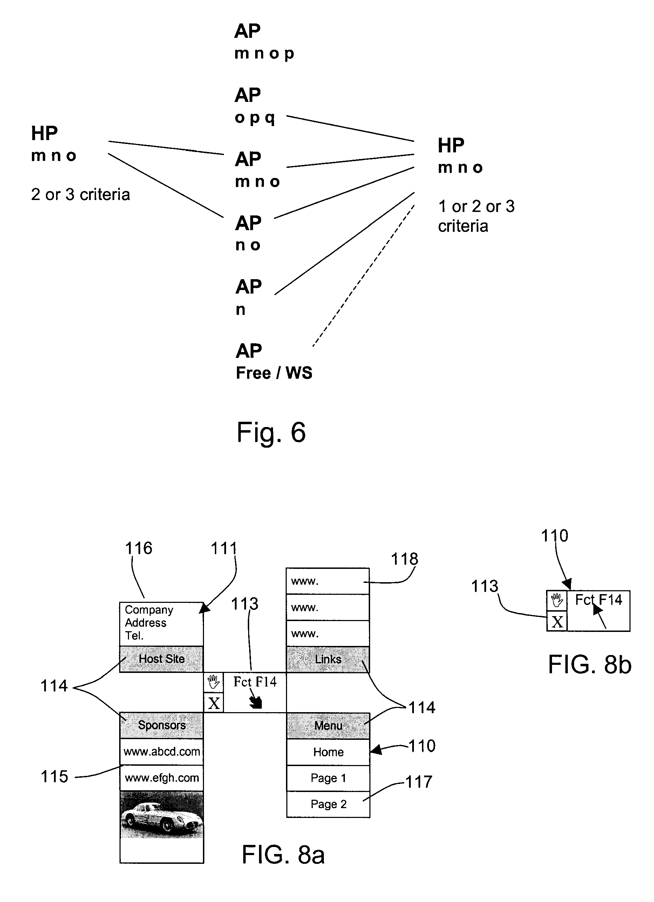

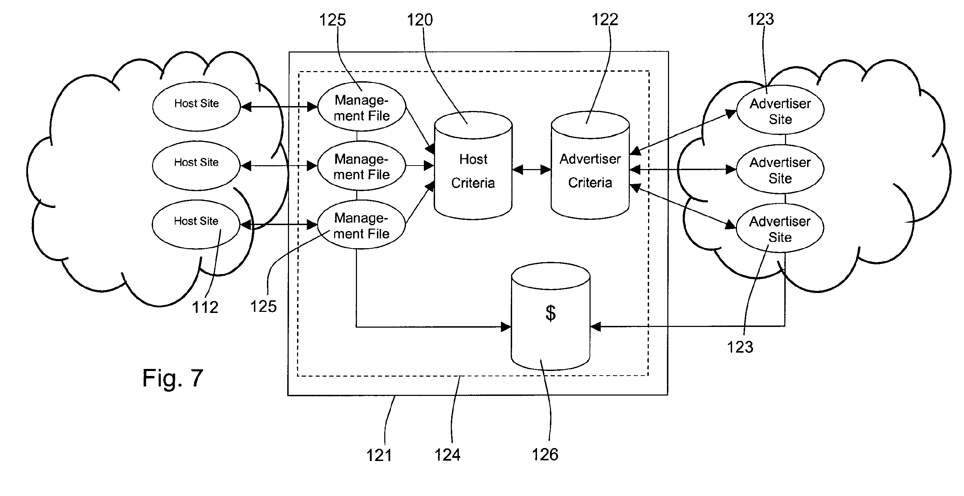

The setting up of advertising supports at 24 can involve designation of the name, selection of the targeting rules, creation of colors for the display from a palette, creation of the advertising link support (from banners, FeedSpiders using DMTL to provide a floating support-for details, see later under the description of Fig. 8a and

Fig, 8b), advanced options, pre-visualization to test the appearance of the display, and code generation.

The module 26 for audience reports can be organized into reports by host sites.

The management platform 30 serves as an advertisement engine permitting the diffusion of sponsored contextual links or adverts on different host sites. The advertisement engine responds to different criteria from the websurfer, the advertiser and the host site, then sends the most relevant adverts. To generate results, the advertisement engine takes into account the following criteria: IP localization (of the websurfer, and of the host site, and possibly the sponsor site), languages; and keywords and other parameters and criteria.

As explained in greater detail below, the automated contextual display integrated into the management platform 30 is managed using different technologies such as the automatic analysis of web pages to reveal a theme by the automatic association of words using segmentation criteria or criteria related to the quality and content of the host site (articles, themes, positioning of elements), or by voice or sound analysis via voice recognition and processing in order to automatically determine relevant words or phrases. The display is done by adapting the supports (Internet, TV, Telephone) qualified as a function of the diffusion means.

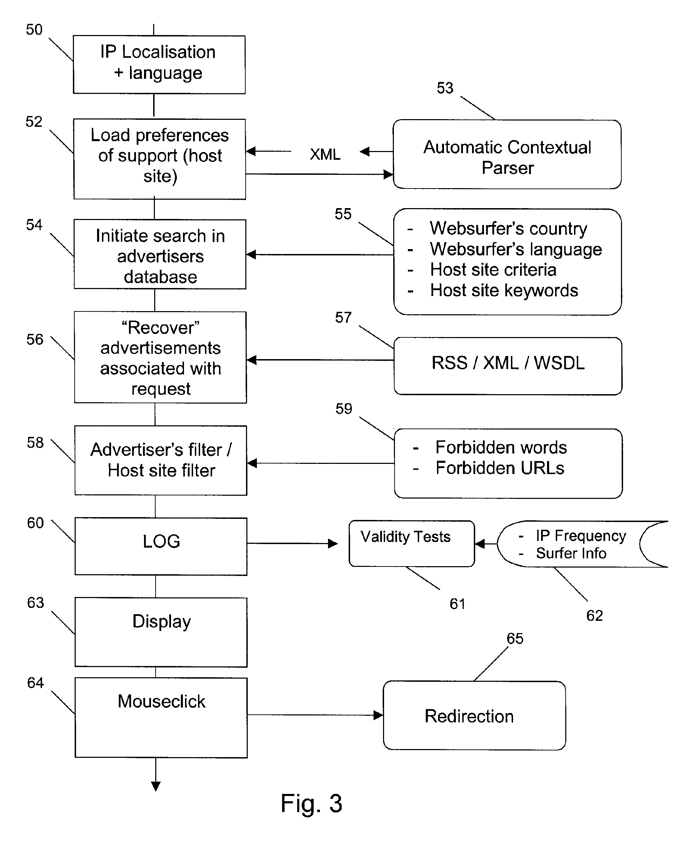

Fig. 3 shows several steps in the automated processing of targeted advertising links when a websurfer (user) accesses a host site 20. IP localization of the websurfer's computer and the websurfer's language are first identified, using standard routines, at 50. At 52 the system loads the host site's preferences in XML using an automatic contextual parser 53. These preferences can include preferences set by the host (in Targeting Rules 23) or determined contextually, as explained below. A search is then initiated at 54 in the advertiser's database; for this use is made of a processing unit 55 that contains the websurfer's country, the websurfer's language, and that uses host site criteria and host site keywords, set up as mentioned before. A comparison is made of the advertisements and host sites that have corresponding criteria, and relevant adverts are recovered at 56, and extracted from an advert database 57 containing a set of adverts in standard Internet formats like RSS (Rich Site Summary), XML (Extensible Markup Language), WSDL (Web Service Definition Language), etc. The selected adverts are then filtered at 58, through an advertiser's filter and a host site filter using, for this, pre-stored forbidden words and forbidden URL's 59 predefined by the advertiser of each of the selected adverts or by the host in question. A Log operation 60 is provided on the basis of validity tests 61 based for example on criteria 62 such as the IP frequency and websurfer information. This enables daily checking of all databases and reports in order to eliminate fraudulent clicking patterns. This can lead to the IP addresses of the identified users being blocked for a period of, say, 1 month or permanently.

Selected adverts are then displayed in step 63 on the host site as viewed on the websurfer's computer screen. When the websurfer executes a mouseclick 64 on the displayed advert, this redirects the websurfer's computer screen at 65 to show the advertiser's site.

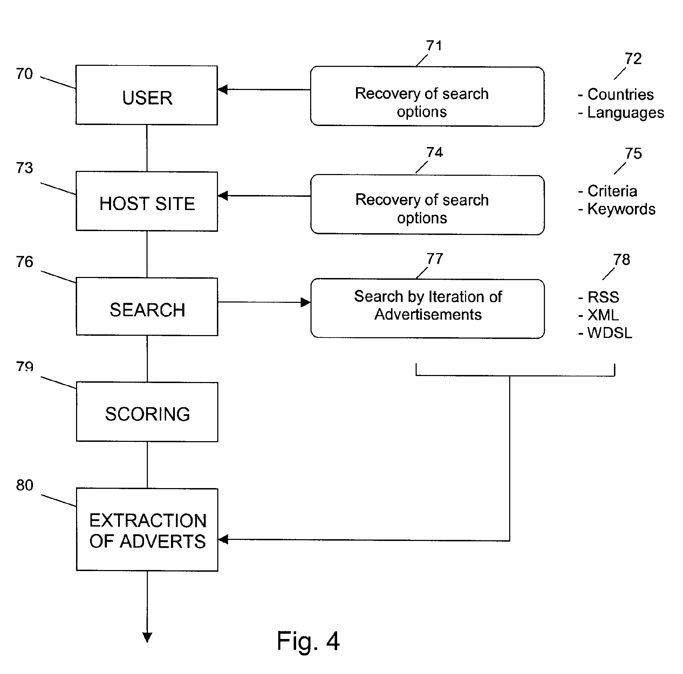

The extraction of relevant adverts is further illustrated in Fig. 4. This Figure is an overview of the advert extraction process steps initiated by a websurfer or user 70 accessing a host site 73. This begins with a recovery of search options 71 based on the user's country and language 72, and a recovery of search options 74 based on the host site criteria and keywords 75. This is followed by a search 76 for matching adverts, made by iteration of adverts stored at 78 in RSS, XML or WDSL format. A matching and scoring 79 takes place leading to the extraction of relevant adverts 80 from the store 78.

The automatic search for keywords in a page is based primarily on four considerations:
1. Parsing of the title for metatags that gives a first weighting to words and attributes points, as in the following example of parsing a title for the word "opinion":
   <title>DialogCentral - Opinion</title>
   <meta name="description" content="Identify and diagnose user experience issues and track user satisfaction page-by-page by continuously collecting and analyzing Web user feedback using OpinionLab OnlineOpinion system.">
   <meta name="keywords" content="Opinion Lab, OpinionLab, online opinion, onlineopinion, user feedback, website feedback, ">
2. Elimination of the menus and other "noise" factors, like images and ancillary text, from the page. This results in "cleaning" the page to leave only a principal text zone that is identified and, for example, outlined in a color like red.
3. Automatic detection of the situation of the texts to be analyzed in the principal text zones of the pages (at the center, in the right implies greater importance).
4. Association of selected keywords to synonyms and eponyms in order to reinforce the pertinence.
5. Stemming, as outlined below.

The concept of stemming used to implement this invention involves deciding which documents in a collection should be retrieved based on a query or profile that contains one or more search terms, plus perhaps additional information such as importance weights. The retrieval decision is made by comparing the terms of the query with important words or phrases ("index terms") appearing in the document. The decision may be binary (retrieve/reject), or it may indicate the degree of relevance of the document to the query. Because words often have many morphological variants, recognizing pairs of terms such as "computing" and "computation" as equivalent requires some form of natural language processing (NLP). Often, morphological variants of words have similar semantic interpretations and can be considered as equivalent for the purpose of IR applications. For this purpose, stemming Algorithms, or stemmers, have been developed to reduce a word to its stem or root form in which the key terms of a query or document are represented by stems rather than by the original words. This means that different variants of a term can be conflated to a single representative form and also reduces the dictionary size, that is, the number of distinct terms needed to represent a set of documents. A smaller dictionary results in saving storage space and processing time. For information retrieval purposes, the stems generated may or may not be genuine words. For example, "computation" might be stemmed to "comput" - provided that different words with the same 'base meaning' are conflated to the same form, and words with distinct meanings are kept separate. An algorithm that converts a word to its linguistically correct root ("compute" in this case) is called a lemmatizer. Examples of products using stemming algorithms are the Lycos and

Google search engines, and also thesauruses and other products using NLP for information retrieval.

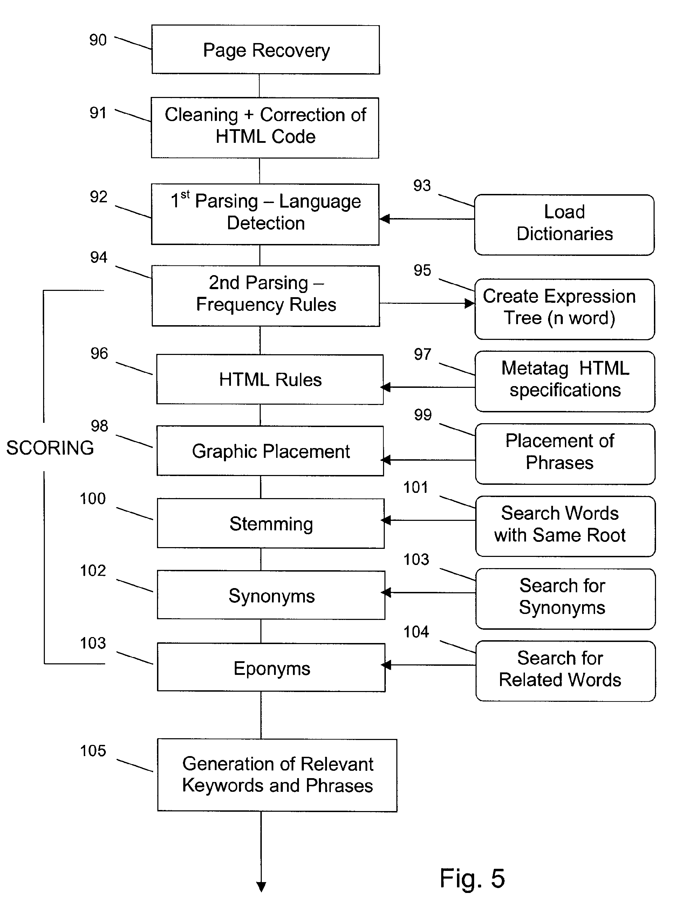

Fig. 5 illustrates the steps in developing keywords and phrases from a web page.

This operation begins by page recovery 90, followed by cleaning of the page and correction of the HTML code, at 91. A language detection operation and first parsing operation takes place at 92, involving loading of the required dictionaries 93. This is followed by a second parsing operation 94 according to frequency rules, and the creation of an expression tree (n word) 95. Next step 96 involves the application of HTML rules and analysis of metatag HTML expressions in the page header. A graphic placement step 98 is based on the placement of phrases 99. Stemming 100 involves searching 101 for words with the same root. Then there is a search for synonyms 102/103 and eponyms 103/104 which covers related words. Scoring takes place from the 2^{nd} parsing step 94 to the eponym step 103, whereby the analyzed words are weighted for value. Resulting from the analysis are selected keywords and phrases relevant to the content of the web page.

Fig. 6 illustrates a simulation of an example of matching associated with scoring. The middle column represents a series of Advertising Partners AP displaying different selection criteria for their adverts, these criteria being represented by the small letters "m", "n", o", "p", "q" in different combinations. The lowermost AP is a Web Service (such as that provided by Amazon) that offers free advertisements. Two Host Partners HP are represented, each having the same three criteria "m", "n", "o" for their adverts. However, the left hand HP specifies that 2 or 3 of its criteria must be fulfilled, whereas the right-hand HP specifies that 1, 2 or 3 of its criteria can be fulfilled.

In this example, the left-hand HP matches with two APs having the common criteria "mno" and "no". The right-hand HP matches with four APs containing one or more of its three criteria. It can also match with the Free/WS AP. The latter would usually come into use to display an advert only if there are no correspondences with paying APs.

Note that with this matching scheme an advert (like "AP-mnop" ― 4 criteria) that has more criteria than the HP considered (both with 3 criteria) will never be displayed by this HP. The HP displays solely those adverts that correspond at most to the same number of criteria of the HP.

Note also that each HP can specify a maximum number of adverts, so that if a HP matches with a greater number of APs, it can operate with a random selection mode.

This simple example of Fig. 6 illustrates that having more criteria, and requiring the fulfillment of more criteria, makes the matching more selective.

Fig. 7 illustrates a management platform comprising:
? at least one management site 121 responsible for accounting and the diffusion of advertisements; this site allows the control of host sites 112 and of the advertisers' sites 123;
? management files 125 inside the management site allowing users to construct a display panel 111 and define target criteria;
? advertiser sites 123 allowing owners to make advertisements and diffuse them on the targeted display panels of the host sites;
? a final user site called host site 112 where the host defines choice criteria and downloads the display panel. Then it is installed on the Internet navigator and delivers advertisements originating from advertisers sites.

The management platform allows also the control the display of links and payments, as well as invoicing.

A browser 110 (Fig. 8a) used in the host site of this embodiment is not configured, as in the equivalent devices of the prior art, by a computer code integrated into the code of the host site. On the contrary, the configuration of the browser is carried out in a specific file, called a management file 125, managed by a management site and containing the data necessary for the display of the links and the layout of the device.

The computer code of the host site 112 only contains one link that indicates the location of the management file 125. The latter contains the data necessary for the configuration of the browser 110. This file can be accessed by the owner of the host site 112, and modified at his convenience, without the owner of the management site having to intercede. Thus, different configurations can be tested very easily thus allowing greater flexibility for the user.

With reference to Figures 8a and 8b, the illustrated browser 110 notably includes a display panel 111 that can be made visible from a host site 112, on a computer display. According to this embodiment of the invention, the device is provided to allow the display of this panel according to several predefined formats and in particular according to the eight formats described below. The first format is conventional and is known as a banner. It refers to a horizontal band generally placed at the top of a page of a site.

The second format also corresponds to a band, which is vertical and generally placed on the left or the right of the page. These bands have dimensions that, without being normalized, are relatively standard so that the site creators can provide a (corresponding) reserved area during the design of an Internet site.

The third format is a vertical band, placed on the left of the page, in a zone usually reserved for the display of general data such as the history of the last sites visited or the user's favorite sites. This zone is known under the term "side bar".

The fourth format is called a toolbar, which is a horizontal band that is displayed at the top of the screen, near the menu bar. According to one variant, the display panel can be displayed in the form of a tool bar in electronic messages.

The fifth format is a smartlink format wherein a relevant word or words in a webpage is selected automatically or manually, such that when the websurfer's screen pointer passes over the word by displacement of the websurfer's mouse, it actuates the display of adverts that are related to the underlined word(s).

The sixth format, called FeedSpider, is discussed in detail below with reference to Figs. 8a and 8b; it can include the display of advertisements and streams of contextual news imported from freely-available sources of information worldwide.

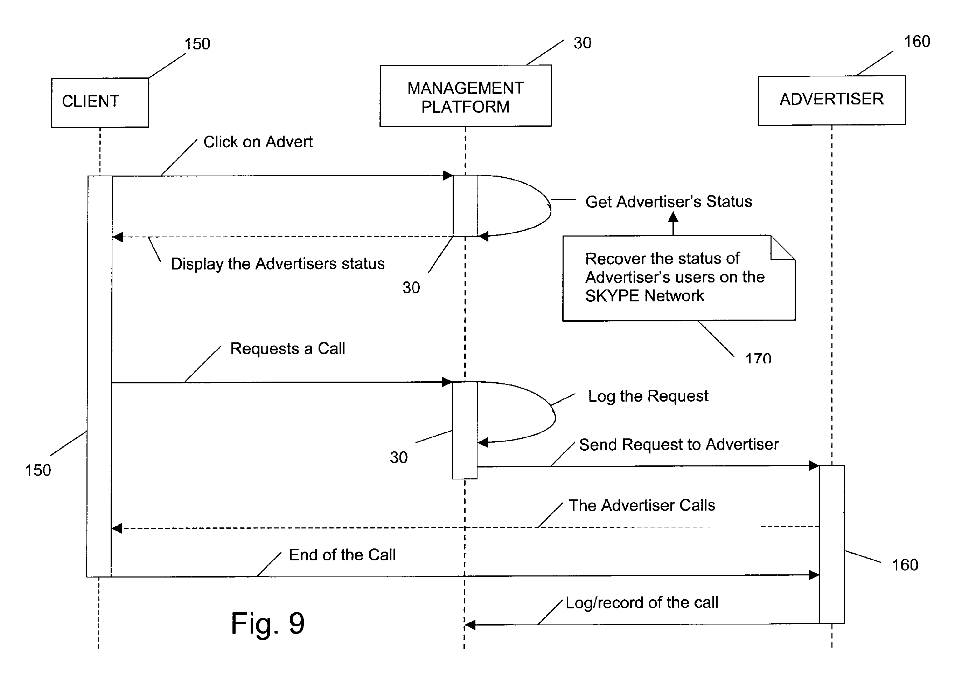

The seventh format is called "Pay per call over VoiceIP". This format enables the websurfer to place a toll-free call via the VOIP network from a personal computer to the advertiser. The advertiser pays only if the call reaches him. Further details are given in connection with Fig. 9.

The eighth format is in the form of pages maintained on the platform by the platform operator and that are available as sponsor site/pages for use by advertisers who don't have their own site or who don't wish to use their own site for this purpose.

These formats are proposed in such a way that the browsing device, according to the invention, is compatible with the existing sites designed to integrate advertising banners and to offer the largest possible choice to users. There are also other formats, in particular rectangles inserted onto the screen, for example in the middle of the screen.

In general, regardless of the size used, the display panel can be personalized by the user. In fact, the user can indicate his areas of interest. Advertising links are displayed in relation to these areas of interest. The display panel can also be personalized by a company wishing to carry out an advertising campaign. Functions can also be added, such as in particular a pop-up advertisement blocking tool.

When the host has defined his choice criteria or areas of interest, the display panel is downloaded by the user and the display panel is then able to display advertising links.

The above-mentioned sixth format (called FeedSpider) is illustrated in Figure 8a. In this example, which constitutes a preferred embodiment of the invention, the display panel 111 includes five areas. The first area is a function control area 113, displaying the indications for the management of the panel itself and for access to particular functions. These indications can, for example, concern the movement, opening, closing, display or elimination of the panel 111. Closure of the panel 111 is understood to mean the elimination of the display of the areas forming this panel, with the exception of the function control area. Opening is understood to mean the display of all the areas 113, 114 of the display panel. Elimination corresponds to the removal of the panel 111 completely, including the function control area 113. Deployment corresponds to the visualization of at least one part of the panel 111, that is to say at least the function control area 113 and, optionally, the other areas, namely said display areas 114.

The panel 111 is made in the form of software, preferably written in a language known under the acronym dhtml (dynamic hypertext markup language), that offers flexibility adapted to these types of applications.

In Figure 8a, the panel includes four rectangular display areas 114, arranged around the function control area 113. This control area 113 is rectangular and the display areas open in the four corners of the control area. These display areas allow different types of elements to be made visible. Among these, there are in particular advertising links, or promotional links, that is to say links that allow a netsurfer to access an advertising site from a host site. These links are represented by reference 115 in Figure 8a. The activation and the use of such links are explained in detail below.

According to a preferred embodiment, at least one display area 114 is reserved for the display of advertising links, while the other areas are left at the disposal of the user. Among the types of display links there may be data without a link, for example, the address or telephone number of the owner of the host site or of the company, as represented under reference 116 in Figure 8a. It is also possible to display photography or an access plan or any other element of this type. Clicking on this type of element has no effect.

Another type of element can include a link towards another page on the host site, as indicated by reference 117. This link can be indicated in the form of a URL address, a text and/or an image. For example, it is possible to display an image representing an access plan connected to a page of the site including the same access plan on a larger scale. It is also possible to add text or an image to a multimedia file.

Another element can include a link towards a page of another Internet site. As previously, the link can be executed in the form of a URL address, a text and/or an image. This is illustrated by reference 118.

In one implementation, the links are defined by the owner of the host site, using a configuration assistance menu which is found in the management site 121, by introducing first the element (text/image) that the user wishes to display in a corresponding area of the display panel, then by connecting this element to a URL address, if necessary.

In another implementation, the links are automatically generated in the following way. When the owner of a host site 112 wishes to place sponsored links 115 on his site, he defines the types of links that he wants to appear by means of keywords and/or categories. These are stored in a database 120 of a management site 121, as represented in Fig. 7. Similarly, by means of a second configuration assistance menu intended for sponsors, an advertiser who wants the links towards his site to appear on a host site defines the type of host sites on which he wishes his link to be seen by means of keywords or categories. These elements are also stored in a database 122 of the management site 121. An automatic search for links is carried out on the basis of these categories and/or these keywords, by searching for a similarity between the host sites and the advertisers, as described previously.

In this embodiment, it is possible to define a maximum number of displayed links. As an example, a maximum N can be displayed, for example ten links in an area of the panel. These N links can be the most pertinent N links, that is to say those for which the criteria defined by the host site and the advertisers sites are the most similar. It is also possible to display N links determined at random or according to a rule established among all the advertiser sites that respond to the criteria of the host site.

According to a particular embodiment of the invention, the elements displayed in each area of the display panel are of a same type. For example, one of the areas 116 contains only data without a link. Another area 117 of the array contains only links towards other pages of the host site. A third area 118 contains only links towards the pages of other sites and the fourth area 115 contains sponsored links.

It is possible for the display of certain areas to be optional while, for others the display is obligatory. In particular, the display of an area containing sponsored links 115 would be obligatory, while the use of the other areas is left under the control of the owner of the host site.

The function control area 113 can contain icons or text that render intelligible the different functions available. For example, by placing a pointer such as a computer mouse on a specific icon in the functional area, having for example the form of a hand, and by moving this pointer, it is possible to displace the display panel 111, which allows access to the entire contents of a page of the site without having to close the display panel. It is also possible to associate an action on a computer to a function of the display panel. As an example, the pressing of a function key designated by "Fct", together with the pressing of a mouse button can create one or more actions such as opening or closing, display or elimination of the display panel 111; these actions can be different according to the present state of the panel.

This management platform 121 (Fig. 7) contains management means 124 including the data necessary for the definition of the display panel. More concretely, the management platform 121 includes, for each host site 112, formal data and basic data.

The formal data relates in particular to the size, location, colors and the form of the display panel 111. It can also relate to the number of areas displayed or any other data that allows the definition of the general aspect of the display panel 111.

The basic data relates to the data necessary for the working of the display panel 111, in particular the URL addresses of the links to appear on the panel 111. It also relates to the keywords and the criteria that have been defined by the owner of the host site and that are stored in the database 120 for the criteria of the host sites 112.

This information is contained in a computer file called a management file 125 and connected to the management centre 121. A link towards this file 125 must be placed in the computer code of the host site 112. It should be noted that this link is only formed by the file address and that no other element must be modified in the computer code of the host site 112. This means, in particular, that the computer code of the host site 112 does not contain any information relating to the aforementioned formal data, unlike the sites existing at present.

The display panel 111 is configured according to the requirements of the owner of the host site 112, and is configured by this owner, starting from his site, by accessing the management file 125 containing all the data required. It is to be noted that a configuration assistance menu can be provided to define not only the formal aspects of the display panel 111, but also the functional aspects. This assistance menu can, for example, propose different formats for the display panel 111 that are predefined and/or to be chosen by the user. The assistance menu also allows the introduction of keywords in free text form and/or the designation of predefined categories.

Access to the file 125 of the management platform 121 related to a determined host site 112 is carried out by providing an identification code connected to this host site 112, in such a way as to guarantee that the person trying to access this file 125 is in possession of the necessary rights. This identification can be carried out in a conventional way by the introduction of a username and a password, although other means such as, in particular, cryptographic processes can be used. When the management centre 121 has determined that a person has the necessary rights to modify the contents of the management file 125, the latter is made accessible to this person, in such a way as to authorize a certain number of modifications.

This process is particularly advantageous due to the fact that installation, configuration and modifications are extremely simple to carry out and is implemented immediately. Therefore, it is possible, for example, to test different page layouts of the display panel 111, by varying the number of areas displayed 114, their size, colors, etc., until a suitable page layout is found. Similarly, at any moment it is possible to eliminate a link or add another or to correct links that are no longer valid without having to wait for an authorization of the manager of the management sites 121. If the sponsored links 115 appearing on the host site 112 are not deemed suitable for its owner, it is also very simple to prohibit the display of a determined link by indicating its URL address in the management file 125 and by specifying that this link should not be used. It is also possible to change the keywords or the categories used that as a result will modify the links that are automatically generated.

As previously indicated, the management platform 121 contains another database 122, attached to advertisers or promoters. This database 122 contains all the data related to these advertisers, in particular the categories and/or the keywords defining their site or the host sites 112 on which they want appear. As an example, an advertiser marketing top-of-the-range cars intended for certain determined socio-professional categories could register under the keywords or categories relating to this kind of clientele, rather than in the category "Car".

The advertiser database 122 also contains a certain number of criteria necessary for the management of the financial aspects of the links. In particular, this database 122 can contain a total amount corresponding to the maximum amount that the advertiser is prepared to invest for a given campaign, as well as an amount to be paid for access to its advertisements from a host site, called cost per click. Therefore, each time a netsurfer accesses a promoter's site through a host site, the promoter pays an amount corresponding to the cost per click, until the total amount is reached. At this moment, the advertiser will be requested to pay into his account or the link will be withdrawn from the host site 112. It should be noted that the cost per click can be defined statically or dynamically and variably according to certain parameters such as the number of genuine visits per day, etc. In practice, the cost per click can be defined according to the number of categories and/or keywords introduced by the sponsor. The higher the number of categories, the more the advertisements are targeted and the higher the cost per click will be. Other financial approaches can also be provided. For example, it is possible to define not only a cost per click but also a cost for the duration of visits to the site of the promoter, on the basis that the longer the visit to the site, the more interested the visitor will be. Of course, a combination of the two approaches is possible, by combining a flat rate through a cost per click and a variable cost according to duration.

The management platform 121 includes a financial management database 126. This base registers the host sites 112 from which the sponsor sites 123 have been visited, the sponsor sites 123 that have been visited in relation to the host site 112 that generated these visits, as well as invoicing parameters. These parameters are those previously mentioned, namely the cost per click and/or the visit duration, as well as all parameters that must be taken into account to establish a distribution of the amounts involved in these operations.

This embodiment of the invention is particularly advantageous over prior art devices, since it combines the advantages of different existing browsing systems, without presenting the drawbacks. In particular, the device does not require the introduction of the configuration parameters into the computer code of the host site, which allows simpler installation and greater flexibility in its configuration and method for use. As an auxiliary aid element to browsing it can remain available to the user either continuously or on request. The display panel 111 allows browsing between sites or within one site; it is very user-friendly and effective, without implying an important and irreversible loss of the space available to display useful data. Furthermore, it allows the management of sponsored links in a simple, flexible and targeted way both for the owner of a host site as well as for the owner of a sponsor site.

The management platform of Fig. 7 integrates into the overall system according to the invention and can include any of the features described with reference to Figs. 1-6.

Fig. 9 is a diagram of a VOIP application that enables control over communications with professional partners. Using programs like SKYPE, MSN and GIZMO, pay-percall enables an advertiser to enter into direct contact with a client without any communications expense, either for technical support, direct marketing or sales assistance.

This technology can be incorporated in the system according to the invention as part of each management platform's services. This enables website editors, search engine providers and portals with vertical-hierarchy or general-purpose portals, to operate sponsored link services under their own brand, in combination with a back-office and ad-servers in ASP mode, providing also VOIP connection.

The described VOIP application can also be provided as part of the browsing system according to WO/2004/06156, or as a stand-alone system managed by web services or dedicated APIs.

The basic concept is that when a websurfer clicks on an advert he or she is directly connected to the advertiser via a VOIP application such as SKYPE. If no telephone operator is available, the websurfer will be immediately redirected to a web page on which the websurfer can request a call-back.

The system operates like a telephone exchange. It is connected to the management platforms in order to manage incoming calls as well as the activities of commercial advisors.

The management platform or the VOIP system can be arranged to direct the incoming calls as a function of various parameters such as a websurfer's language and the availability of commercial advisors who may be located in multiple geographical zones.

The advertisers or other users can be charged per call, when a conversation exceeds a minimum duration defined by the system.

The VOIP system according to this invention can have the following key operating features:
- Automatic Availability Management: it automatically directs calls only to available operators or commercial advisors who can predefine available time slots, or display an absent signal when they are not available for calls.
- Language Management: it has a language management arrangement whereby calls can be directed as a function of the operators' language(s).
- Product Management: it also has a function for directing calls to operators as a function of particular products.
- Quota Management: it can determine a maximum quota of calls that each operator may receive.
- Record of Calls: it can store a precise record of each call - each advert clicked, each keyword clicked, the originating site, date and duration of the call, subject of the call, the product concerned, comments, categorization of the call ("of interest", "not of interest", "client", ...), clients' first and second names, clients' e-mail address, etc.
- Data Export: it can allow the export of call records in CSV (Concurrent Version Systems) or XML format for exploitation by a CRM (Customer Related Management) or other business applications.
- Web Back-Office Management: it can include a web back-office management unit which provides the management platform for setting up operators, and which provides parameters for the operators, manages products; provides access to the operators' activities, and provides operator performance reports.

Fig. 9 schematically shows how a client 150 (websurfer, prospective customer) accesses an advertiser 160 via telephone operators, sales advisors or a customer support service 170 using the VOIP system of the invention.

First, the client 150 clicks on an advert displayed on his computer screen via the Internet using a system for contextual display of adverts, preferably the previously-described system or that using the browsing device according to WO/2004/06156.

This click connects to the management platform 30 that recovers the status of advertiser 160 on the SKYPE network, i.e. the occupancy of the telephone operators, sales advisors or customer support service 170. This determines the availability of the advertiser's operators to take calls, as well as their language, etc, and this status is displayed on the client's computer screen. The client then immediately makes a request to call the advertiser 160 if the advertiser's status is "available" (or the user is directed to a web-page with an indication to call later, if the status of the operator is "occupied", in which case the call request is deferred).

This call request is logged by the management platform 30 that then transmits the request to the advertiser 160. In response to this call request, the advertiser 160 calls the client 150 using SKYPE. At the end of the call a log/record is made of the call, as previously described, by the management platform 30. The call record can be stored at the location of the advertiser 160 and/or in the management platform 30. This management platform 30 can also perform all of the aforementioned functions.

For the described VOIP system combined with the contextual display of adverts, it is convenient to operate in a pay-per-click mode where the advertiser pays per click, for example limited to paying only when a telephone communication is initiated.

Different invoicing modes are also possible in particular for other applications involving different relationships between two parties. Examples of other invoicing modes are: charging a licence fee, charging according to the duration of the communication, or making a flat-rate charge.

In addition to the contextual display of adverts, the described VOIP system applies generally to any applications involving host sites that are associated with telephone operators for replying to calls initiated by clients/websurfers, including: Distance Learning; Technical Support Services; Advisory Services; E-business; and Telemarketing.

## Claims

1. A system for the targeted contextual display of subjects, in particular advertisements, in a distributed computer network such as the Internet which comprises a plurality of sponsor sites each containing subjects to be displayed on host sites and a plurality of host sites each having at least one page arranged to display subjects from sponsor sites, the system comprising a plurality of management platforms each having operating means that include:
- a sponsor site management unit accessible to sponsors, the sponsor site management unit comprising means for sponsors to administer the targeted display of subjects from sponsor sites, and means for storing keywords, categories and/or parameters that are derived from sponsor sites and that identify contexts for the targeted display of subjects in the host sites;
- a host site management unit accessible to hosts, the host site management unit comprising means for hosts to administer the targeted display of subjects from sponsor sites m pages of their host sites, and means for storing keywords, categories and/or parameters that are derived from host sites and that identify contexts by which the host sites are targeted; and
- means for matching the keywords, categories and/or parameters of the sponsor sites with those of the host sites for the targeted contextual display of subjects from sponsor sites on host sites,
**characterized in that**:
- the system comprises a shared server platform common to the management platforms;
- said operating means of all management platforms are compatible, and said means for matching of the management platforms are interconnected via the shared server platform;
- each management platform is associated with its own sponsor sites and its own host sites who access only that management platform, each management platform constituting an autonomous system for the targeted contextual display of subjects in the distributed computer network; and
- the shared server platform is arranged to enable the targeted contextual display of subjects from sponsor sites on host sites that are associated with different management platforms.

2. The system of claim 1 wherein:
- each management platform is identified by its own management platform code that is different for the different management platforms;
- the keywords, categories and/or parameters of each management platform's sponsor sites and the keywords, categories and/or parameters of each management platform's host sites are associated with the management platform code of the management platform with which they are associated;
- the keywords, categories and/or parameters of sponsor sites, which are associated with the management platform code of one management platform, are available via the shared server platform for matching with the keywords, categories and/or parameters of the host sites of other management platforms, said availability being subject to possible exceptions; and
- the keywords, categories and/or parameters of host sites, which are associated with the management platform code of one management platform, are available via the shared server platform for matching with the keywords, categories and/or parameters of the sponsor sites of other management platforms, said availability being subject to possible exceptions.

3. The system of claim 1 or 2 further comprising means for compiling statistics relating to the operations performed relating to given sponsor sites and to given host sites, said statistics being associated with the management platform codes of the sponsor sites and host sites.

4. The system of claim 3 wherein each management platform comprises means for compiling said statistics.

5. The system of claim 3 or 4 wherein the shared server platform comprises a central statistical unit that is common to the management platforms, the central statistical unit comprising means for compiling statistics relating to operations performed by the different management platforms relating to given sponsor sites and operations performed by the different management platforms relating to given host sites.

6. The system of claim 3, 4 or 5 wherein said compiling means compiles statistics relating to the number of times that given sponsor sites communicate with or are displayed or accessed by host sites, the duration of such communication, display or access and/or the number of times that an action is performed in relation thereto, and to the number of times that given host sites communicate with or display or access sponsor sites, the duration of such communication, display or access and/or the number of times that an action is performed in relation thereto.

7. The system of any preceding claim wherein each management platform comprises means for deriving said keywords, categories and/or parameters from sponsor sites and host sites, the keyword/category/parameter deriving means including at least one of the following:
a) means for assisting the input of keywords by a sponsor or host of a sponsor site or a host site;
b) means for automatically generating keywords, categories and/or parameters by analysis of text in a site;
c) means for generating keywords, categories and/or parameters from metatags in the header/title of a site; and
d) means for processing audio content of a site and for generating keywords, categories and/or parameters from the processed audio content.

8. The system of any preceding claim which operates with host sites whose display panel is at least one of:
i) a horizontal or vertical banner or other fixed space;
ii) a sidebar;
iii) linked text that activates a display in response to a user actuation;
iv) a superimposed movable element that can be displaced on a page of the host site and that contains links that activate a display in response to a user actuation;
v) a zone linked by VOIP enabling the user to initiate a telephone communication with a sponsor;
vi) a panel common to several pages of a host site;
vii) display area(s) structured to display at least one of the following types of links: sponsored link; link towards a page on another site; link towards another page on the host site;
viii) a display panel made up of a function control area having a rectangular form, and rectangular display areas that can be opened in the corners and/or along edges of the control area; and
ix) display area(s) including images and/or text associated with sponsored links

9. The system of any preceding claim wherein the management platforms comprise means for storing the codes that define the attributes of the display panel of host sites in the management platform, said storing means in the management platform being accessible from the respective host sites.

10. The system of any preceding claim wherein at least one management platform maintains a site that is available as sponsor site.

11. The system of any preceding claim wherein the shared server platform does not dispose of its own means that provide the functions of said operating means but places into communication said means for matching of the different management platforms.

12. The system of any preceding claim in combination with claim 8 feature v) wherein at least one management platform is arranged, in response to a user request, to check the availability of a sponsor's capacity to receive telephone communications, to log user requests for a call to a sponsor, and to send a user's call request to a sponsor who then initiates a telephone communication with the user.
